# EUROPÄISCHE PATENTANMELDUNG

(11) **EP 1 536 134 A2**
(43) Veröffentlichungstag der Anmeldung: **01.06.2005**
(21) Anmeldenummer: 04450213.6
(22) Anmeldetag: 19.11.2004
(51) Int. Cl.: F03D 9/00, F03B 11/00

(54) **Generatoreinheit für eine Wind- oder Wasserkraftturbine**

(30) Priorität: 27.11.2003 AT 19072003
(71) Anmelder: Markopulos, Johannes, 2512 Tribuswinkel (AT)
(72) Erfinder: Markopulos, Johannes, 2512 Tribuswinkel (AT)
(74) Vertreter: Weiser, Andreas, Dr.

(57) **Zusammenfassung**

Generatoreinheit (1) für eine Wind- oder Wasserkraftturbine, mit einer von dieser antreibbaren Welle (3) und zumindest einem elektrischen Generator (6-9), wobei die Welle (3) zumindest ein Reibrad (4, 5) und jeder Generator (6 - 9) ein Antriebsritzel (14 - 17) aufweist, welches mittels eines steuerbaren Triebes (10 - 13) unter Reibeingriff an das Reibrad (4, 5) anstellbar ist, und wobei der Generator (6 - 9) um eine zur Welle (3) parallele Drehachse in Richtung auf das Reibrad (4, 5) verschwenkbar gelagert ist, wobei die Drehrichtungen und die Relativlage von Reibrad (4, 5) und Antriebsritzel (14 - 17) in der Eingriffstellung eine Verrastung des Reibeingriffs bewirken.

## Beschreibung

Die vorliegende Erfindung betrifft eine Generatoreinheit für eine Wind- oder Wasserkraftturbine, mit einer von dieser antreibbaren Welle und zumindest einem elektrischen Generator, wobei die Welle zumindest ein Reibrad und jeder Generator ein Antriebsritzel aufweist, welches mittels eines steuerbaren Triebes unter Reibeingriff an das Reibrad anstellbar ist.

Wind- und Wasserkraftturbinen unterliegen häufig stark schwankenden Anströmungsmengen und -geschwindigkeiten, und zwar bei Windkraftwerken je nach allgemeiner Wetterlage und durch Windböen usw. bedingt, bei Wasserkraftwerken durch jahreszeitliche Schwankungen des Wasseraufkommens, insbesondere bei kleinen Bächen oder Flüssen aufgrund der Schneeschmelze oder durch Hitzeperioden usw. Dies hat stark schwankende Umdrehungsgeschwindigkeiten der Turbine und der von dieser angetriebenen elektrischen Generatoren zur Folge.

Es wurde daher bereits vorgeschlagen (DE 38 01 673, EP 1 363 019, DE 196 52 673), die stark schwankende Turbinenanströmungen durch das Zu- und Abschalten einzelner Generatoren zu kompensieren, um die Turbinenwelle in den gewünschten Drehzahlbereich zu bringen. Die Generatoreinheit der DE 38 01 673 A umfaßt dazu ein Reibrad mit vertikaler Drehachse und um dessen Umfang verteilten Generatoren mit in der Eingriffstellung vertikalen Antriebsritzeln, wobei die Generatoren um eine horizontale Schwenkachse an das Reibrad anstellbar sind.

Die bekannte Konstruktion hat den Nachteil, daß die Triebe zur Aufrechterhaltung des Reibeingriffs eine permanente Anpreßkraft erzeugen müssen, was nur durch aufwendige Getriebeübersetzungen oder eine ständige Energiespeisung zu bewerkstelligen ist, welche auf Kosten der Energieausbeute der Generatoreinheit geht.

Die Erfindung setzt sich zum Ziel, eine kostengünstige Generatoreinheit für eine Wind- oder Wasserkraftturbine zu schaffen, welche selbst bei stark schwankenden Strömungsbedingungen energieeffizient ist und damit einen wirtschaftlichen Betrieb auch von Kleinstkraftwerken ermöglicht.

Dieses Ziel wird mit einer Generatoreinheit der eingangs genannten Art erreicht, die sich gemäß der Erfindung dadurch auszeichnet, daß der Generator um eine zur Welle parallele Drehachse in Richtung auf das Reibrad verschwenkbar gelagert ist, wobei die Drehrichtungen und die Relativlage von Reibrad und Antriebsritzel in der Eingriffstellung eine Verrastung des Reibeingriffs bewirken.

Auf diese Weise wird ohne aufwendiges Getriebe und ohne ständige Energiespeisung der Anstelltriebe ein permanenter und sicherer Reibeingriff in der Eingriffstellung erzielt. Gleichzeitig ist durch die erfindungsgemäße Schwenk- und Anstellbewegung der Generatoren jederzeit ein einfaches Lösen des Reibeingriffs möglich und damit ein rasches Zu- und Abschalten einzelner Generatoren möglich, wie es für ein rasches Reagieren auf stark schwankende Turbinenanströmungen erforderlich ist.

Die erfindungsgemäße Konstruktion ist daher insbesondere für die bevorzugte Ausführungsform mit zumindest zwei elektrischen Generatoren geeignet, die sich auszeichnet durch eine Meßeinrichtung, welche die Umdrehungsgeschwindigkeit der Welle oder die Anströmgeschwindigkeit der Wind- oder Wasserkraftturbine mißt, und eine daran angeschlossene und die Triebe der Generatoren ansteuernde Steuereinrichtung, welche bei Überschreitung eines vorgegebenen oberen Schwellwertes zumindest die Ankupplung eines Generators an die Welle und bei Unterschreitung eines vorgegebenen unteren Schwellwertes zumindest die Abkupplung eines Generators von der Welle veranlaßt.

Besonders günstig ist es, wenn die Welle in einem Gehäuse drehbar gelagert und mehrere Generatoren rund um die Welle verteilt an der Innenwand des Gehäuses über die Triebe verstellbar montiert sind, was den Aufbau einer besonders kompakten Generatoreinheit gestattet. Aus demselben Grund kann bevorzugt die Welle zumindest zwei axial voneinander beabstandete Reibräder tragen, zwischen denen jeweils eine Gruppe von Generatoren angeordnet ist.

In jedem Fall ist es besonders günstig, wenn die Generatoren unterschiedliche elektrische Leistung haben und die Steuerung dafür ausgelegt ist, zum Einhalten der genannten Schwellwerte entsprechende Kombinationen von Generatoren an die Welle anzukuppeln. Beispielsweise kann der zweite Generator die halbe Leistung des ersten haben, der dritte Generator ein Viertel der Leistung des ersten usw. wodurch mit nur drei Generatoren bereits sieben Leistungsabstufungen (¼, ½, ¾, 1, 1¼, 1¼, 1¾) erzielt werden können.

Die Erfindung wird nachstehend anhand von in den beigeschlossenen Zeichnungen dargestellten Ausführungsbeispielen näher erläutert. In den Zeichnungen zeigt
Fig. 1 die Generatoreinheit der Erfindung in einer schematischen Seitenansicht und
Fig. 2 einen Draufsicht auf ein Reibrad und den Anstellmechanismus eines Generators im Detail.

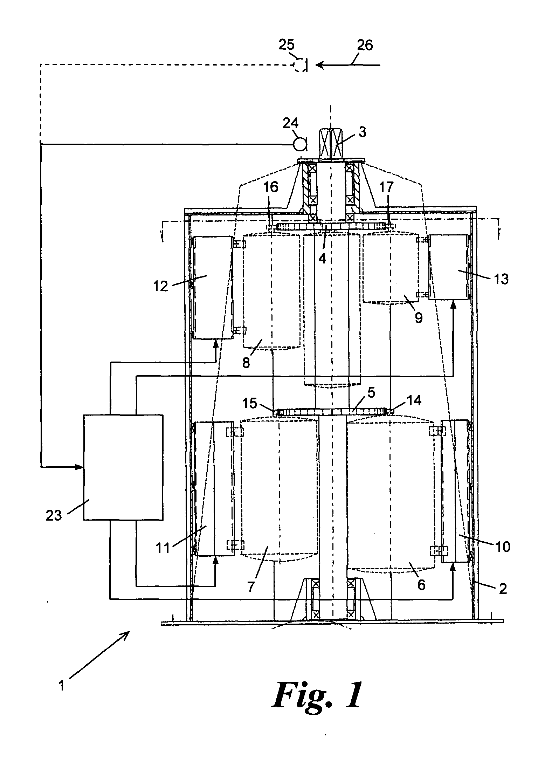

Fig. 1 zeigt eine Generatoreinheit 1 mit einem Gehäuse 2, in dem eine Welle 3 drehbar gelagert ist. Die Welle 3 ist an den Rotor oder Abtrieb einer Wind- oder Wasserkraftturbine (nicht gezeigt) anschließbar bzw. stellt selbst die Rotorwelle dar.

Die Welle 3 trägt zwei axial voneinander beabstandete Reibräder 4, 5, zwischen denen jeweils eine Gruppe elektrischer Generatoren 6, 7 bzw. 8, 9 rund um die Welle 3 verteilt angeordnet ist.

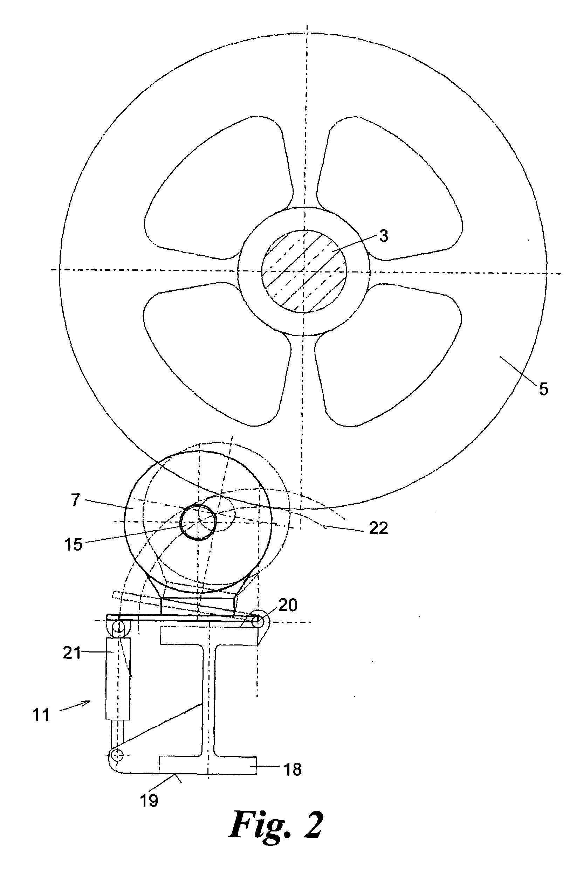

Die elektrischen Generatoren 6 - 9 sind über Triebe 10 - 13 an der Innenwand des Gehäuses 2 verstellbar montiert, sodaß ihre Antriebsritzel 14 - 17 jeweils in Reibeingriff mit einem entsprechenden Reibrad 4, 5 bringbar sind. Fig. 2 zeigt diesen Mechanismus anhand des Generators 7 und seines Triebes 11 im Detail.

Der Trieb 11 umfaßt einen Träger 18, welcher bei 19 an der Innenwand des Gehäuses 2 montiert ist und bei 20 den Generator 7 um eine zur Welle 3 parallele Drehachse schwenkbar lagert. Der Trieb 11 weist ferner einen Anstellzylinder 21 auf, z.B. einen elektrischen Spindeltrieb, einen Magnetschieber, einen Hydraulik- oder Pneumatikzylinder usw., welcher in einem Abstand von der Anlenkung 20 am Generator 7 angreift und diesen in Richtung des Bogens 22 auf das Reibrad 5 verschwenken kann.

In seiner ersten mit ausgezogenen Linien dargestellten Stellung befindet sich der Generator 7 außer Eingriff mit dem Reibrad 5, d.h. sein Antriebsritzel 15 ist vom Außenumfang des Reibrades 5 abgehoben. In seiner zweiten punktiert dargestellten Eingriffsstellung liegt das Antriebsritzel 15 am Außenumfang des Reibrades 5 an.

Wenn die Drehrichtung des Reibrades 5 in Fig. 2 gegen den Uhrzeigersinn ist, tritt in der Eingriffsstellung aufgrund der gezeigten Relativlage von Welle 3 und Schwenkachse 20 gleichsam eine "Selbstsperrung" bzw. Verrastung des Reibeingriffs ein. Die Reibräder 4, 5 können am Außenumfang gummiert, und die Antriebsritzel 14 - 17 geriffelt sein, bzw. umgekehrt.

Zurückkehrend auf Fig. 1 sind die Triebe 10 - 13 der Generatoren 6 - 9 von einer Steuereinrichtung 23 gesteuert. Die Steuereinrichtung 23 empfängt ein Meßsignal von einer Drehzahlmeßeinrichtung 24, welche die Umdrehungsgeschwindigkeit der Welle 3 oder der Reibräder 4, 5 mißt.

Alternativ könnte die Steuereinrichtung 23 auch ein Meßsignal von einer Meßeinrichtung 25 erhalten, welche die Anströmgeschwindigkeit der Wind- oder Wasserkraftturbine selbst mißt, d.h. die Geschwindigkeit des Mediums 26 (Wind oder Wasser), welches auf die Wind- oder Wasserkraftturbine trifft.

Die Steuereinrichtung 23 ist so eingestellt, daß sie bei Überschreitung eines vorgegebenen oberen Schwellwertes für die Umdrehungsgeschwindigkeit der Welle 3 oder die Anströmgeschwindigkeit des Mediums 26 die Ankupplung jeweils eines weitern Generators 6 - 9 an die Welle 3 veranlaßt, bzw. umgekehrt bei Unterschreitung eines vorgegebenen unteren Schwellwertes die Abkupplung jeweils eines weiteren Generators.

Beim Ankuppeln eines weiteren Generators können andere Generatoren auch wieder abgekuppelt werden, bzw. umgekehrt beim Abkuppeln eines weiteren Generators auch wieder andere angekuppelt werden. Dies ist insbesondere nützlich, wenn die Generatoren 6 - 9 unterschiedliche elektrische Leistungen haben: In diesem Fall kuppelt die Steuereinrichtung 23 für den jeweils gewünschten Lastfall eine entsprechende Kombination an elektrischen Generatoren 6 - 9 an. So kann beispielsweise der Generator 7 die Hälfte der Leistung des Generators 6 haben, der Generator 8 ein Viertel der Leistung des Generators 6 und der Generator 9 ein Achtel der Leistung des Generators 6. Bei vier Generatoren können damit 15 Leistungsabstufungen zwischen 1/8 und 1 7/8 eingestellt werden, bei fünf Generatoren 31 Leistungsabstufungen zwischen 1/16 und 1 15/16, usw.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Generatoreinheit (1) für eine Wind- oder Wasserkraftturbine, mit einer von dieser antreibbaren Welle (3) und zumindest einem elektrischen Generator (6-9), wobei die Welle (3) zumindest ein Reibrad (4, 5) und jeder Generator (6 - 9) ein Antriebsritzel (14 - 17) aufweist, welches mittels eines steuerbaren Triebes (10 - 13) unter Reibeingriff an das Reibrad (4, 5) anstellbar ist, **dadurch gekennzeichnet, daß** der Generator (6 - 9) um eine zur Welle (3) parallele Drehachse in Richtung auf das Reibrad (4, 5) verschwenkbar gelagert ist, wobei die Drehrichtungen und die Relativlage von Reibrad (4, 5) und Antriebsritzel (14 - 17) in der Eingriffstellung eine Verrastung des Reibeingriffs bewirken.

2. Generatoreinheit nach Anspruch 1 mit zumindest zwei elektrischen Generatoren, **gekennzeichnet durch** eine Meßeinrichtung (24, 25), welche die Umdrehungsgeschwindigkeit der Welle oder die Anströmgeschwindigkeit der Wind- oder Wasserkraftturbine mißt, und eine daran angeschlossene und die Triebe (10 - 13) der Generatoren (6 - 9) ansteuernde Steuereinrichtung (23), welche bei Überschreitung eines vorgegebenen oberen Schwellwertes zumindest die Ankupplung eines Generators (6 - 9) an die Welle (3) und bei Unterschreitung eines vorgegebenen unteren Schwellwertes zumindest die Abkupplung eines Generators (6 - 9) von der Welle (3) veranlaßt.

3. Generatoreinheit nach Anspruch 1 oder 2, **dadurch gekennzeichnet, daß** die Welle (3) in einem Gehäuse (2) drehbar gelagert ist, wobei mehrere Generatoren (6 - 9) rund um die Welle (3) verteilt an der Innenwand des Gehäuses über die Triebe (10 - 13) verstellbar montiert sind.

4. Generatoreinheit nach einem der Ansprüche 1 bis 3, daß die Welle (3) zumindest zwei axial voneinander beabstandete Reibräder (4, 5) trägt, zwischen denen jeweils eine Gruppe von Generatoren (6 - 9) angeordnet ist.

5. Generatoreinheit nach einem der Ansprüche 2 bis 4, **dadurch gekennzeichnet, daß** die Generatoren (6 - 9) unterschiedliche elektrische Leistung haben und die Steuerung (23) dafür ausgelegt ist, zum Einhalten der genannten Schwellwerte entsprechende Kombinationen von Generatoren (6 - 9) an die Welle (3) anzukuppeln.
